# EUROPÄISCHE PATENTSCHRIFT

(11) **EP 2 920 656 B1**
(45) Veröffentlichungstag und Bekanntmachung des Hinweises auf die Patenterteilung: **17.02.2021**
(21) Anmeldenummer: 13821426.7
(22) Anmeldetag: 14.11.2013
(51) Int. Cl.: G05B 19/409, G06F 3/0488, G06F 3/0484, B29C 45/76, G06F 3/041

(54) **VERFAHREN ZUM SICHEREN UND BEWUSSTEN AKTIVIEREN VON FUNKTIONEN UND/ODER BEWEGUNGEN EINER STEUERBAREN TECHNISCHEN EINRICHTUNG**
METHOD FOR THE SECURE AND INTENTIONAL ACTIVATION OF FUNCTIONS AND/OR MOVEMENTS OF CONTROLLABLE INDUSTRIAL EQUIPMENT
PROCÉDÉ POUR ACTIVER DE MANIÈRE FIABLE ET INTENTIONNELLE DES FONCTIONS ET/OU DES MOUVEMENTS D'UNE INSTALLATION TECHNIQUE COMMANDABLE

(30) Priorität: 15.11.2012 AT 505202012
(43) Veröffentlichungstag der Anmeldung: 23.09.2015
(73) Patentinhaber: KEBA AG, 4041 Linz (AT)
(72) Erfinder: HACKL, Benjamin, A-4020 Linz (AT); KÖGL, Peter, A-4020 Linz (AT); PREISINGER, Gernot, A-4030 Linz (AT)
(74) Vertreter: Burger, Hannes
(86) Internationale Anmeldenummer: PCT/AT2013/050223
(87) Internationale Veröffentlichungsnummer: WO 2014/075121

(56) Entgegenhaltungen:
- EP-A1- 2 363 790
- WO-A2-98/37506
- US-A1- 2010 138 031

## Beschreibung

Die Erfindung betrifft Methoden und Vorrichtungen, die das sichere, bewusste und möglichst irrtumsfreie Auslösen unterschiedlicher und unmittelbar ausführbarer Maschinenfunktionen mittels einem relativ großflächigen berührungssensitiven Eingabemittel in der Art eines Touch-Screen ermöglichen. Auf dem Eingabemittel bzw. dem Bedienpanel ist eine Mehrzahl von Bedienelementen in Form von Auswahlfeldern ausgebildet, wobei das Auffinden und Betätigen der Bedienelemente bzw. Auswahlfelder durch die Bedienperson ohne deren visuelle Unterstützung und Kontrolle ermöglicht ist Insbesondere betrifft die Erfindung ein Verfahren zum sicheren und bewussten Aktivieren von Funktionen bzw. Bewegungen einer steuerbaren, technischen Einrichtung via zumindest ein vergleichsweise großflächiges berührungssensitives Eingabemittel in der Art eines kapazitiven Touch-Screens, bei dem die vorgesehenen Bedienelemente bzw. Auswahlfelder durch aufgebrachte haptisch wahrnehmbare Markierungen gekennzeichnet sind. Für das Auslösen bzw. die Aktivierung eines Bedienelementes bzw. Auswahlfeldes beziehungsweise einer einem Auswahlfeld zugeordneten technischen Funktion, insbesondere einer Maschinenfunktion, ist dabei die Auswahl des Bedienelementes sowie anschließend die Eingabe einer charakteristische Touch-Geste bzw. Touch-Bewegung von der Bedienperson vorzunehmen. Dadurch kann ein Steuerungssystem, insbesondere eine dem Bedienpanel zugeordnete Auswerteeinheit, zufällige bzw. irrtümliche Berührungen etwa beim blinden Ertasten eines gekennzeichneten Bedienelementes bzw. Auswahlfeldes von einer gewollten Bedienhandlung unterscheiden, sodass ungewollte bzw. irrtümliche Bedienhandlungen zuverlässig hintangehalten werden.

Bei bekannten und weit verbreiteten Multimedia-Geräten mit Touch-Screens erfolgen die meisten Bedienhandlungen durch bloßes Berühren an vorgegebenen Stellen (nachgebildete Tasten, Schaltflächen, Eingabefelder, Checkboxes, usw.) oder durch bestimmte Gesten (z.B. für das Vergrößern einer Ansicht, das Wechseln zwischen Fenstern und Ansichten, zum Positionieren von Fenstern, zum Scrollen in Listen, ...). Der Benutzer nimmt dabei die zur Aktivierung einer Funktion vorgesehene Fläche in der Regel visuell wahr und kann die Funktion entsprechend gezielt mit einem oder mehreren Fingern auslösen beziehungsweise eine entsprechende Geste auf der Touch-Oberfläche ausführen.

Weiters ist aus dem Stand der Technik eine Bedienung von Personal Computern oder tragbaren elektronischen Geräten, wie smart-phones, über Touch-Screens bekannt. Dabei können auch taktil ertastbare Hilfsmittel zum Einsatz kommen.

In der WO 98/37506 A2 sind Methoden offenbart, mittels welcher die Produktivität und Benutzerfreundlichkeit von grafischen Benutzeroberflächen dadurch verbessert werden soll, indem die Absolut- und Relativpositionierbarkeitspotentiale von verschiedenen Eingabegeräten, unter anderem Touch Pads ausgeschöpft werden. Insbesondere offenbart die WO 98/37506 A2 Methoden zum raschen Wechseln zwischen verschiedenen die Positionieranzeigen, im Falle eines Touch Pads durch bloßes Aufsetzen eines Fingers in bestimmten Randzonen, zum Beispiel einer Kommando- oder Bildlaufleiste. Durch Aufsetzen eines Fingers in einem Bereich welcher keine Randzone ist, kehrt die Positionieranzeige wieder zur ursprünglichen Position zurück. Die einzelnen Zonen auf dem Touch Pad können dabei taktil mit Kanten markiert sein. Insbesondere gehen mit dem Wechseln zwischen verschiedenen Positionieranzeigen auch automatische Wechsel der Bewegungs- bzw. Nachführgeschwindigkeiten der Positionieranzeige einher, sodass einerseits zum Beispiel Kommandomenüs mit erhöhter Schnelligkeit auswählbar sind, und andererseits Textstellen mit erhöhter Präzision ausgewählt oder markiert, bzw. der Positionsanzeiger mit erhöhter Präzision an einer gewünschter Position im Textfeld platziert werden kann. Ein sicheres Verfahren zur Bedienung von Maschinen bzw. zum sicheren Auslösen von Maschinenfunktionen ist in der WO 98/37506 A2 nicht offenbart.

Die EP 2 636 790 A1 offenbart eine Methode zur Detektion einer Anfrage-Geste in einem Bereich eines berührungssensitiven Displays eines tragbaren elektronischen Geräts, wie eines smart-phones. Wenn dabei eine Anfrage-Geste in Verbindung mit diesem Bereich des berührungssensitiven Displays detektiert wird, wird eine Antwortfunktion in Form einer taktilen Rückmeldung, zum Beispiel einer Rüttelbewegung veranlasst, welche durch eine Person erfühlbar ist. Außerdem ist ein Halfter zur Aufnahme des tragbaren elektronischen Geräts offenbart. Das Halfter umfasst einen Körper mit einer Führung, wobei die Führung an einen Bereich des berührungssensitiven Displays angeglichen ist. Diese Führung des Halfters ist taktil lokalisierbar. Ein Verfahren zur sicheren Bedienung von Maschinen bzw. zum sicheren Auslösen von Maschinenfunktionen ist auch in der EP 2 636 790 A1 nicht offenbart.

Auch im Bereich von Bediengeräten für Maschinen, Robotern und vergleichbaren Anlagen werden seit längerem Bedienpanels mit Touch-Screens eingesetzt. Trotz der Flexibilität und dem erhöhtem Bedienkomfort von Touch-Screens sind Bedienpanels für die Bedienung von Maschinen im industriellen Einsatz bislang stets mit zusätzlichen mechanischen Tasten oder Bedienelementen kombiniert. Der Touch-Screen wird dabei in der Regel nur für die Visualisierung von Betriebszuständen und für die Veränderung von Betriebsparametern und weiteren vergleichbaren Eingaben verwenden, bei denen keine unmittelbaren Auswirkungen aufgrund der Eingabe auftreten, bzw. erfolgt eine unmittelbare Auswirkung, beispielsweise im Sinne einer Ausführung einer technische Funktion wie zum Beispiel einer Maschinenfunktion in Form einer Verfahrbewegung oder dergleichen in der Regel erst nach einer abschließenden Bestätigung der vorgenommenen Änderungen.

Für das unmittelbare Auslösen von technischen Funktionen, insbesondere das manuell gesteuerte Verfahren und Positionieren von Maschinenachsen oder sonstigen Teilen einer Anlage sind herkömmliche Touch-Screens mit einfachen, lediglich visuellen Nachbildungen von herkömmlichen Tasten ungeeignet, da während eines solchen Bedienvorganges der Blick der Bedienperson oftmals auf die Maschine, insbesondere auf die zu bewegende Maschinenkomponente gerichtet ist und nicht auf das Bedienpanel selbst.

Durch die nahezu kraftlose Erfassung von Berührungen durch einen Touch-Screen fehlt für die Bedienperson die wichtige Möglichkeit, eine bestimmte aus mehreren Bedienelementen bzw. Auswahlfeldern bestehende Bedienfläche zuerst zu erfühlen bzw. zu ertasten, ohne gleichzeitig bereits die zugeordnete technische Funktionen auszulösen. Die Problematik wird dadurch verschärft, dass üblicherweise eine ganze Reihe von solchen Tast- oder Schaltelementen für eine Mehrzahl von Funktionen vorgesehen ist. Deshalb müsste eine Bedienperson im Zuge einer Bedienhandlung zwischen verschiedenen Funktionen und Schaltelementen hin und her wechseln, während die Bedienperson den Blick auf die Maschine gerichtet hat. Im Falle von herkömmlichen Schaltelementen kennt die Bedienperson aufgrund ständiger Übung sehr bald die ungefähre Position der einzelnen Bedienelemente und deren relative Lage zu einander und kann damit deren genaue Position rasch ertasten bzw. auffinden (etwa den dritten Taster in einer Reihe) und diesen dann bewusst und zielgenau betätigen.

In der US 2010/0138031 A1 sind eine Methode und ein Gerät für die Steuerung von Maschinen offenbart. Dabei werden für zumindest einige, operative Steuerungseingaben haptische bzw. taktile Tasten benutzt, welche Taster hinsichtlich der Funktion programmierbar sind. Eine Bedienperson kann dadurch einen Tastenanschlag haptisch erkennen, oder einen Taster durch Erfühlen eines taktil wahrnehmbaren Randes um eine Taste erkennen. Die Methode bzw. das Gerät sieht vor, dass eine Maschinenparametrierung via eines ersten Kontrollfeldes durchgeführt wird während die Bedienperson auf einen Bildschirm sieht, und dass operative Steuerungseingaben via Maschinenbewegungs-Taster eines zweiten Kontrollfeldes durchgeführt werden während die Bedienperson die Maschine beobachtet. Durch die haptische bzw. taktile Ausgestaltung zumindest einiger der Tasten des zweiten Kontrollfeldes kann die Bedienperson dabei erkennen, ob ihr Finger sich tatsächlich auf der Taste befindet, und kann die Bedienperson auch ein Abrutschen bzw. Abgleiten von dem Taster wahrnehmen.

Die Ausstattung eines an sich völlig ebenen und glatten Touch-Panels oder Touch-Screens mit haptisch wahrnehmbaren Markierungen, etwa durch aufgebrachte Überhöhungen, ausgefräste Vertiefungen oder aufgeraute Oberflächen, versetzt die Bedienperson zwar prinzipiell in die Lage, einzelne Bedienflächen zu ertasten und diese ohne visuelle Unterstützung aufzufinden, es fehlt jedoch eine Möglichkeit, die einer Bedienfläche bzw. einem Auswahlfeld zugeordnete technische Funktion bewusst, zeitgenau und verwechslungsfrei auszulösen, und vor allem ein ungewolltes Auslösen einer Funktion zuverlässig zu unterbinden.

Aufgabe der gegenständlichen Erfindung ist daher die Schaffung eines Verfahrens zum Auslösen von Maschinenfunktionen, bei dem definierte und mit haptischen Markierungen versehene Auswahlflächen bzw. Auswahlfelder auf einem berührungssensitiven Positionserfassungssensor ohne visuelle Unterstützung durch bloßes Ertasten von einer Bedienperson aufgefunden und in der Folge eine jeweils zugeordnete Maschinenfunktion bewusst, zeitgenau und wiederum ohne visuelle Unterstützung ausgelöst werden kann und bei welcher die Gefahr einer unbeabsichtigten Auslösung minimiert ist.

Eine weitere Aufgabe der Erfindung ist die Schaffung einer Vorrichtung zur Durchführung eines solchen Verfahrens.

Die Aufgabe wird erfindungsgemäß durch ein Verfahren mit den Merkmalen nach Anspruch 1 beziehungsweise durch ein Bedienpanel mit den Merkmalen gemäß Anspruch 13 gelöst.

Der Vorteil der erfindungsgemäßen Maßnahmen liegt darin, dass via ein mit einem berührungssensitiven Positionserfassungssensor ausgestattetes Bedienpanel, insbesondere in der Art eines Touchpanels oder Touch-Screens, Maschinenfunktionen, wie etwa Verfahrbewegungen von Achsen von steuerbaren Maschinen, Anlagen oder Robotern, unmittelbar ausgelöst werden, wobei die Bedienung ohne visuelle Unterstützung, d.h. quasi blind erfolgen kann. Das Bedienpanel weist eine Anzahl von Bedienelementen bzw. Auswahlfeldern auf, deren Lage auf der Sensorfläche des Positionserfassungssensors vorgegeben ist.

Die Bedienelemente bzw. Auswahlfelder sind durch entsprechend aufgebrachte haptische Markierungen, beispielsweise in der Art von aufgedruckten Erhebungen, eingefrästen Vertiefungen oder durch aufgeraute Oberflächen gekennzeichnet. Dadurch ist eine Bedienperson, welcher die ungefähre Lage und Anordnung der Bedienelemente bzw. Auswahlfelder durch ständige Übung rasch geläufig ist, durch bloßes Erfühlen bzw. Ertasten in der Lage, die einzelnen Bedienelemente bzw. Auswahlfelder auch ohne Hinsehen auf das Bedienpanel einfach aufzufinden, und während den Bedienvorgängen zwischen verschiedenen Bedienelementen bzw. Auswahlfeldern zu wechseln. Der Blick kann dabei ständig auf die von der Bedienhandlung beeinflusste technische Einrichtung bzw. Maschine beziehungsweise den beeinflussten Maschinenteil gerichtet bleiben, um die unmittelbare Auswirkung der Bedienhandlungen zu überprüfen und diese erforderlichenfalls zu korrigieren.

Insbesondere erfolgt ein blindes Auffinden und die Auswahl einer bestimmten Auswahlfläche dadurch, dass zunächst mit mehreren Fingern bzw. der flachen Hand über die Sensorfläche gestrichen wird, bis die gewünschte Auswahlfläche ertastet wird und sodann ein Finger in das betreffende Auswahlfeld gezogen wird. Dann werden alle anderen Finger vom Sensorfeld abgehoben, bis auf jenen im gewählten Auswahlfeld, wodurch die Auswerteeinheit die Auswahl dieses Feldes erkennt und akzeptiert. Im unmittelbaren Anschluss kann die gewünschte Funktion sofort durch Einleitung der entsprechenden charakteristischen Touch-Geste ausgelöst werden. Dadurch ergibt sich eine besonders nahtlose, intuitive und gleichzeitig verwechslungssichere Bedienweise.

Wesentlich dabei ist, dass eine Maschinenfunktion nicht bereits durch bloßes Berühren eines bestimmten Auswahlfeldes ausgelöst wird, sondern dafür zuerst die Auswahl eines bestimmten Auswahlfeldes, sowie eine anschließende charakteristische Geste bzw. Bewegung auf der Sensorfläche des Positionserfassungssensors erforderlich ist. Der Ablauf für die bewusste Auswahl eines Auswahlfeldes ist so gestaltet, dass er sich möglichst nahtlos in den natürlichen Vorgang des Ertastens der Position eines jeweiligen Auswahlfeldes einfügt, jedoch technisch von einer Auswerteeinheit des Bedienpanels von einer zufälligen bzw. ungewollten Berührung klar unterschieden werden kann, so dass die Wahrscheinlichkeit für eine unbeabsichtigte Auswahl beispielsweise im Zuge des bloßen Überstreichens des Eingabebereiches bereits minimiert ist.

Die Ausführung einer Maschinenfunktion erfolgt jedoch noch nicht mit der bloßen Auswahl einer Auswahlfläche, sondern vielmehr erst mit der bewussten Durchführung einer charakteristischen Touch-Geste bzw. Touchbewegung auf dem Sensorfeld des Positionserfassungssensors.

Jede für die Bedienperson verfügbare Maschinenfunktion wird durch die Auswerteeinheit zumindest einer Auswertebeziehung als Kombination aus der Auswahl eines Auswahlfeldes bzw. einer Auswahlfläche und einer charakteristischen Touch-Geste bzw. Touchbewegung zugeordnet.

Die Bedienperson bestimmt also zunächst das Auswahlfeld und schränkt damit die Menge der Maschinenfunktionen auf genau eine oder nur einige wenige ein, welche dem Auswahlfeld bzw. der Auswahlfläche zugeordnet ist bzw. sind, und bestimmt dann durch eine charakteristische Touch-Geste bzw. Touchbewegung den genauen Zeitpunkt, zu dem die der Auswertebeziehung zugeordnete technische Funktion ausgelöst wird und kann bei gleichzeitigem Blick auf den beeinflussten Teil der technischen Einrichtung bzw. Maschine die Auswirkung seiner Bedienhandlung sofort überprüfen.

Durch die zweistufige Bedienhandlung bestehend aus Auswahl und Auslösung ist eine hohe Sicherheit gegen unbeabsichtigte Bedienhandlungen und eine Annäherung an den Bedienvorgang mit herkömmlichen Schalt- und Tastelementen gegeben.

Vorteilhaft ist eine Weiterbildung des Verfahrens nach Anspruch 2, bei der einem Auswahlfeld mehrere funktional ähnliche und vorzugsweise komplementäre Maschinenfunktionen zugeordnet sind, etwa das Öffnen und Schließen einer Schutztüre, das Ein- und Ausschalten einer Pumpe oder dergleichen. Bei der Auswahl des Auswahlfeldes erfolgt zunächst nur eine Einschränkung der technischen Funktionen auf die jeweiligen dem Auswahlfeld zugeordneten, komplementären Funktionen, wie zum Beispiel das Öffnen oder Schließen einer Schutztür. Diese beiden Funktionen sind nun weiters zwei verschiedenen charakteristischen Touch-Gesten bzw. Touch-Bewegungen zugeordnet, so dass die Bedienperson durch die Wahl der Touch-Geste bestimmt, welche der beiden Funktionen ausgeführt wird. So kann beispielsweise etwa mit einer ziehenden Fingerbewegung (Drag-Geste) nach links die Schutztüre geöffnet und mit einer ziehenden Fingerbewegung nach rechts die Schutztüre geschlossen werden. Durch die Mehrfachbelegung eines Auswahlfeldes mit Funktionen und die finale Auswahl durch eine charakteristische Touch-Geste ist zum einen eine kompakte Anordnung mit vergleichsweise wenigen Auswahlfeldern möglich, was letztlich auch die blinde Orientierung auf dem Bedienpanel erleichtert, und ist zum anderen die Bedienung besonders intuitiv, da beispielsweise das Einschalten oder Aktivieren einer Komponente immer mit einer bestimmten ersten Geste und das Ausschalten und Deaktivieren mit einer bestimmten zweiten Geste verknüpft werden kann.

Eine besonders effiziente, weil einfache Möglichkeit zum Auswählen eines Auswahlfeldes ist im Folgenden beschrieben. Die Auswahl erfolgt dabei durch das Aufsetzen des Fingers innerhalb eines Auswahlfeldes. Das bloße Überstreichen des Bedienpanels beziehungsweise eines Auswahlfeldes führt hingegen noch nicht zu dessen Auswahl, so dass die Gefahr einer irrtümlichen Auswahl beim Aufsuchen des Auswahlfeldes verringert wird. Diese Form der Auswahl ist vor allem auch bei gleichzeitigem Blick auf das Bedienpanel geeignet, da dann ein Auswahlfeld in der Regel direkt mit dem Finger berührt wird und trotz der Zielsetzung einer blinden Bedienbarkeit eine Bedienung mit Blickkontakt nach wie vor komfortabel und intuitiv ermöglicht ist.

Eine besonders effiziente charakteristische Touch-Geste für das Auslösen einer Maschinenfunktion ist in Anspruch 3 angeführt. Diese einfache und schnell ausführbare Bewegung erlaubt ein besonders schnelles Verfahren zur Aktivierung von allenfalls aufeinanderfolgenden Funktionen für den sicheren Betrieb einer technischen Einrichtung.

Eine nochmals verbesserte Touch-Geste für das Auslösen einer Maschinenfunktion ist gemäß den Merkmalen in Anspruch: 4 möglich. Durch die Festlegung einer bestimmten Richtung für das Herausziehen des Fingers aus dem Auswahlfeld wird zum Einen eine weitere Absicherung gegen ein zufälliges und ungewolltes Auslösen einer Maschinenfunktion geschaffen.

Zum anderen kann dadurch auch eine einfache Differenzierung verschiedener charakteristischer Touch-Gesten zum Auslösen unterschiedlicher technischer Funktionen ausgehend von ein und derselben Auswahlfläche erfolgen.

Eine zusätzliche Absicherung gegen zufällige und unbeabsichtigte Funktionsauslösungen wird gemäß den Merkmalen nach Anspruch 5 geschaffen. Dadurch wird eine Funktion demnach nur dann ausgelöst, wenn der Finger aus dem ausgewählten Auswahlfeld in ein bestimmtes benachbartes Auswahlfeld gezogen wird.

Eine weitere, vorteilhafte Touch-Geste bzw. Touch-Bewegung wird in Anspruch 6 angegeben. Dabei verbleibt der erste Finger nach der Auswahl einer Auswahlfläche innerhalb dieser Auswahlfläche und die Maschinenfunktion kann durch eine Touch-Geste mit Hilfe eines zweiten Fingers ausgelöst werden.

Durch diese Lösung verbleibt ein Finger auf der Auswahlfläche, wodurch die Auswahl als solche ohne die Gefahr eines Irrtums aufrecht erhalten werden kann So können die der Auswahlfläche zugeordneten Maschinenfunktionen mittels unterschiedlicher Touch-Gesten nacheinander ausführt werden, ohne dass eine erneute Auswahl des Auswahlfeldes nötig ist.

Die Maßnahmen nach Anspruch 7 schaffen mehrere spezielle und zweckmäßige Ausprägungen für charakteristische Touch-Gesten mit zwei Fingern.

Durch die Lösungen gemäß Anspruch 9, 8 und 10 kann eine ausgelöste Maschinenfunktion, insbesondere eine Maschinenfunktion in Form einer Stell- bzw. Verfahrbewegung jederzeit einfach abgebrochen werden, bzw. lassen sich dadurch Touch-Bewegungen realisieren, die Maschinenfunktionen nur für eine von der Bedienperson gewollte oder bestimmte Zeitspanne aktivieren. Dies ist insbesondere dann zweckmäßig, wenn beispielsweise Maschinenfunktionen wie etwa Verfahrbewegungen bis zu einem bestimmten Zielort benötig werden, und an diesem Ziel abgestoppt werden müssen.

Mit den Merkmalen nach Anspruch 11 ist eine weitere Lösung geschaffen, mit der die Gefahr einer ungewollten Auslösung einer Funktion beim bloßen Überstreichen des Sensorfeldes, zum Beispiel um ein bestimmtes Auswahlfeld taktil aufzufinden, verringert oder nahezu unterbunden ist.

Durch eine weitere Ausführungsform wird die Möglichkeit geschaffen, dass mehrere, insbesondere zwei technische Tast- oder Schaltfunktionen quasi gleichzeitig ausgelöst oder betätigt werden können. Ein weiterer Vorteil ist, dass zusätzliche und unbeabsichtigterweise gebildete Berührpunkte bzw. Berührungsflächen, welche etwa durch Abstützen des Handballens auf der Sensorfläche detektiert werden können, die Auswertung der gewollten Berührpunkte nicht beeinträchtigen.

Durch die vorteilhafte Ausgestaltung nach Anspruch 12 erhält die Bedienperson während der quasi blinden Bedienung eine zusätzliche Rückmeldung für den Fall einer erfolgten Auswahl einer Auswahlfläche oder einer Aktivierung einer Maschinenfunktion. Auch dadurch kann die Gefahr unbeabsichtigter Funktionsauslösungen verringert werden, da eine derartige irrtümlich ausgelöste technische Funktion umgehend erkannt und unterbunden werden kann. Umgekehrt erfasst die Bedienperson auch sofort, wenn die von ihr beabsichtigte Bedienhandlung von der Auswerteeinheit korrekt erkannt und akzeptiert wurde.

Die Verfahrensführung wird wesentlich erleichtert, wenn dadurch mehrere technische Funktionen automatisiert werden können, und somit lediglich eine Bedienhandlung durch eine Bedienperson erforderlich ist, um mehrere technische Funktionen auszuführen.

Gemäß den Merkmalen nach Anspruch 13 wird nun eine steuerungstechnische Vorrichtung gebildet, mittels welcher steuerungstechnische Vorrichtung die Durchführung der erfindungsgemäßen Verfahren nach den Ansprüchen 1-12 ermöglicht ist. Die sich daraus ergebenden, vorteilhaften Wirkungen entsprechen jenen der oben beschriebenen Verfahren.

Durch die vorteilhafte Weiterbildung nach Anspruch 14 wird der Bedienperson eine zusätzliche, nützliche Information über die zur Auslösung vorgesehenen charakteristischen Touch-Geste bzw. Touch-Bewegung gegeben, welche darüber hinaus auch einen zusätzlichen Anhaltspunkt zum verwechslungsfreien Auffinden einer bestimmten Auswahlfläche bieten kann. Insbesondere ist dadurch quasi eine an der Oberfläche des Bedienpanels ausgebildete Führung für den Finger oder anderen Teil der Hand der Bedienperson ausgebildet, wodurch eine fehlerhafte Ausführung einer Touch-Bewegung möglichst unterbunden ist.

Durch die Lösung gemäß Anspruch 15 erhält die Bedienperson eine zusätzliche Information für das Auffinden eines gewünschten Auswahlfeldes, wobei funktional zusammen gehörende Auswahlfelder zu einer ertastbar einheitlichen Gruppe zusammengefügt und als solche gekennzeichnet sind.

Beim Ertasten eines Auswahlfeldes aus der Gruppe ist deshalb sofort ableitbar, in welchen Richtungen sich die weiteren Auswahlfelder derselben Gruppe befinden.

Besonders zweckmäßig ist diese Lösung zur Kennzeichnung bistabiler oder komplementärer Maschinenfunktionen, etwa ein/aus, auf/zu, auf/ab, beispielsweise durch eine haptische Markierung in der Art eines rechts offenen und eines links offenen Kreissegmentes für die beiden jeweils zugeordneten Auswahlfelder.

Die benachbarten Auswahlfelder von bistabilen oder komplementären Maschinenfunktionen können durch spezifische und haptisch wahrnehmbare Markierungen weitere Unterscheidungskraft erhalten, und bieten der Bedienperson weitere Anhaltspunkte für eine verwechslungsfreie Auswahl ohne visuelle Unterstützung beziehungsweise Kontrolle.

Entsprechend dieser Lösung können beispielsweise benachbarte Auswahlfelder zweier komplementärer Funktionen einmal durch einen leeren Kreis und einmal durch einen Kreis mit einem innen liegenden Punkt (oder auch mehrerer solcher Punkte) gekennzeichnet sein.

In einer weiteren Ausführungsform wird eine Lösung geschaffen, die eine besonders gute und rasche Orientierung zur taktilen Auffindung von Auswahlfeldern ohne visuelle Unterstützung ermöglicht. Beispielsweise sind die vorgesehenen Auswahlfelder in mehreren Spalten angeordnet, wobei je Spalte nur vergleichsweise wenige Auswahlfelder angeordnet, und die einzelnen Spalten deutlich zueinander beabstandet sind, so dass die ungefähre Lage einer Spalte beziehungsweise Gruppe bereits durch den jeweiligen Abstand zum Rand des Bedienpanels gut abschätzbar ist und ohne Herantasten sehr rasch, quasi auf den ersten Griff aufgefunden werden kann. Innerhalb einer Gruppe von Auswahlfeldern erfolgt die Orientierung innerhalb der jeweils nur wenigen Auswahlfelder ebenfalls sehr rasch. Ein weiterer Vorteil einer solchen Anordnung ist, dass zwischen den Reihen von Auswahlfeldern ausreichend Platz für eine aussagekräftige, visuelle Kennzeichnung beziehungsweise Beschriftung verbleibt oder im Falle der Verwendung eines Touch-Screens auch verschiedene Statusmeldungen zu den einzelnen Maschinenkomponenten ausgegeben werden können.

Eine weitere Ausfuhrungsform ermöglicht die gleichzeitige Erfassung einer Mehrzahl von Berührpunkten auf der Sensorfläche. Dadurch können zwei oder mehrere Maschinenfunktionen gleichzeitig ausgelöst werden. Weiters erlaubt diese Lösung die Verwendung und Unterscheidung komplexerer Gesten mit mehreren Berührpunkten, wodurch die Anwendungsfreundlichkeit wie auch die Sicherheit gegenüber fehlerhaften und ungewollten Bedienhandlungen steigt. Ein weiterer Vorteil ist, dass gewollte und nicht gewollte Berührpunkte bei gleichzeitigem Auftreten getrennt ausgewertet beziehungsweise bewertet werden können. So wird die bewusste Auswahl eines Auswahlfeldes oder die Aktivierung einer Maschinenfunktion nicht etwa dadurch gestört, dass die Bedienperson beispielsweise gleichzeitig den Handballen auf der Sensorfläche abstützt.

Zum besseren Verständnis der Erfindung wird diese anhand der nachfolgenden Ausführungsbeispiele erläutert.

Es zeigen jeweils in schematischer und stark vereinfachter Form:
- Fig. 1: die Verwendung eines erfindungsgemäßen Bedienpanels zur Steuerung einer Spritzgießmaschine;
- Fig. 2: die Frontfläche eines erfindungsgemäßen Bedienpanels bzw. Bedienterminals mit Auswahlfeldern auf der Sensorfläche eines Touch-Screens;
- Fig. 3: schematisch die wesentlichen Komponenten eines erfindungsgemäßen Bedienpanels bzw. Bedienterminals;
- Fig. 4: exemplarisch eine tabellarische Darstellung von Auslösebeziehungen für die Zuordnung von Maschinenfunktionen zu Auswahlfeldern und charakteristischen Touch-Gesten;
- Fig. 5a: eine charakteristische Touch-Geste zum Auslösen einer Maschinenfunktion unter Verwendung von nur einem Berührpunkt;
- Fig. 5b: eine charakteristische Touch-Geste zum Auslösen einer Maschinenfunktion unter Verwendung von zwei gleichzeitigen Berührpunkten;
- Fig. 6a-6d: ein Beispiel für eine Abfolge von Fingerbewegungen bzw. von Berührpunkten bei der Auswahl eines Auswahlfeldes sowie zum Auslösen einer Maschinenfunktion gemäß einer vorteilhaften Ausführungsform;
- Fig. 7: eine exemplarische Darstellung unterschiedlicher haptischer Markierungen zur Kennzeichnung von Auswahlfeldern.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, un ten, seitlich usw. auf die unmittelbar beschriebene sowie dargestellte Figur bezogen und sind diese Lageangaben bei einer Lageänderung sinngemäß auf die neue Lage zu übertragen.

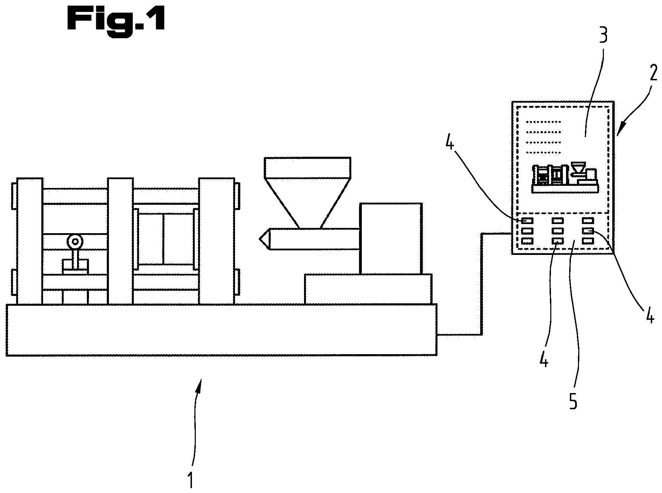

Fig. 1 zeigt eine Spritzgießmaschine 1 als Ausführungsbeispiel einer steuerbaren technischen Einrichtung, welche mit dem erfindungsgemäßen Verfahren steuerungstechnisch beeinflussbar ist. Hierzu ist ein Bedienpanel 2 vorgesehen, mit welchem ein Verfahren zum sicheren und bewussten Aktivieren von technischen Funktionen einer steuerbaren technischen Einrichtung umsetzbar ist. Die Beeinflussung bzw. Bedienung der (Spritzguss)Maschine 1, insbesondere das Aktivieren der technischen Funktionen bzw. Maschinenfunktionen der Maschine 1, erfolgt dabei durch eine nicht gezeigte Bedienperson via das zumindest eine Bedienpanel 2. Das Bedienpanel 2 weist hierzu eine interaktive, grafische Bedienoberfläche 3 auf. Insbesondere ist zumindest ein Teil der Bedienoberfläche 3 durch eine Sensorfläche 5 gebildet, welche Sensorfläche 5 einen berührungssensitiven bzw. drucksensitiven Positionserfassungssensor zur Erfassung von Berührungspunkten auf der Sensorfläche 5 umfasst. Insbesondere kann der

Positionserfassungssensor durch ein sogenanntes Touchpanel bzw. einen Touch-Screen gebildet sein.

Die Berührungspunkte auf der Sensorfläche 5 werden dabei etwa durch den Kontakt von Fingern oder auch von weiteren Teilen der Hand der Bedienperson mit der Sensorfläche 5 des berührungssensitiven Positionserfassungssensors des Bedienpanels 2 generiert. Ein derartiger Positionserfassungssensor ist dabei grundsätzlich zur Erfassung der Position der Berührungspunkte sowie zur Erfassung von Positionsänderungen dieser Berührungspunkte vorgesehen, sodass sowohl die Entstehung, als auch eine zweidimensionale Lageänderung eines Berührungspunktes auf der Sensoroberfläche erkannt wird. Weiters ist es zweckmäßig, wenn der Positionserfassungssensor zur gleichzeitigen Erfassung und Verfolgung mehrerer derartiger Berührungspunkte ausgestaltet ist, da hierdurch Optionen zur Verfügung gestellt sind, um Benutzungsmöglichkeiten des Bedienpanels 2 zu erweitern, bzw. dessen Bedienung zu erleichtern und damit den Komfort für die Bedienperson zu verbessern. Zu diesem Zweck kann insbesondere ein sogenanntes Multi-Touchpanel eingesetzt werden.

Grundsätzlich kann es außerdem von Vorteil sein, wenn der Positionserfassungssensor zur Erfassung weiterer sensorisch erfassbarer Charakteristiken, wie zum Beispiel der Betätigungskraft, der Größe oder der Aufstandsfläche eines Berührpunktes bzw. einer Berührfläche oder der Temperatur von Berührpunkten ausgebildet ist, da derartige, detektierbare Informationen grundsätzlich ausgewertet werden können, bzw. zur Ausführung eines Verfahrens zum sicheren und bewussten Aktivieren von technischen Funktionen einer steuerbaren technischen Einrichtung herangezogen werden können.

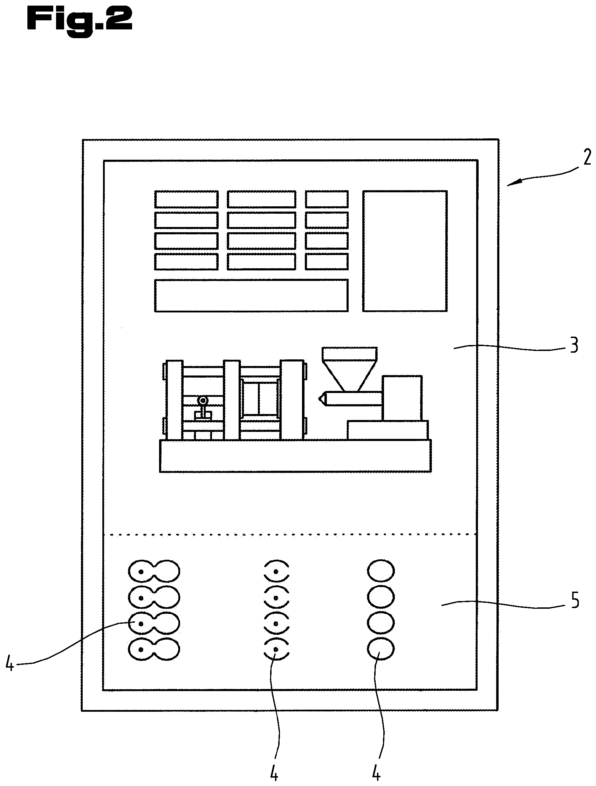

Auf der Sensorfläche 5 des Bedienpanels 2 sind Auswahlfelder 4 angeordnet, welche wie detailliert in Fig. 2 gezeigt, jeweils in Gruppen zusammengefasst sein können, wobei diese Gruppen von Auswahlfeldern 4 dadurch jeweils zusammenhängende Teilbereiche der Sensorfläche 5 definieren.

Auf der Sensorfläche 5 sind weiters haptische Markierungen angeordnet, welche Markierungen den einzelnen Auswahlfeldern 4 zugeordnet sind, bzw. diese Auswahlfelder 4 kennzeichnen. Dadurch ist die jeweilige Bedienperson des Bedienpanels in der Lage, die jeweiligen Auswahlfelder 4 auf der Sensorfläche 5 ohne visuelle Unterstützung, also ohne auf das Bedienpanel 2 zu blicken, lediglich unter Einsatz des Tastsinnes aufzufinden.

Die haptische Ausgestaltung dieser taktil wahrnehmbaren Markierungen auf der Sensorfläche 5 kann auf mannigfaltige Art und Weise vorgenommen werden. Insbesondere sind für die Ertastbarkeit derartiger Markierungen deren Ausbildung durch taktil wahrnehmbare Variationen im Höhen- bzw. Tiefenprofil der Sensorfläche 5 geeignet, sodass im Gegensatz zu herkömmlichen Touch-Screens oder Touchpanels keine ebene Sensorfläche resultiert. Derartige Markierungen können beispielsweise durch aufgebrachte Überhöhungen, ausgefräste Vertiefungen in der Sensorfläche 5 oder durch eine Aufrauung der Sensorfläche 5 erreicht werden.

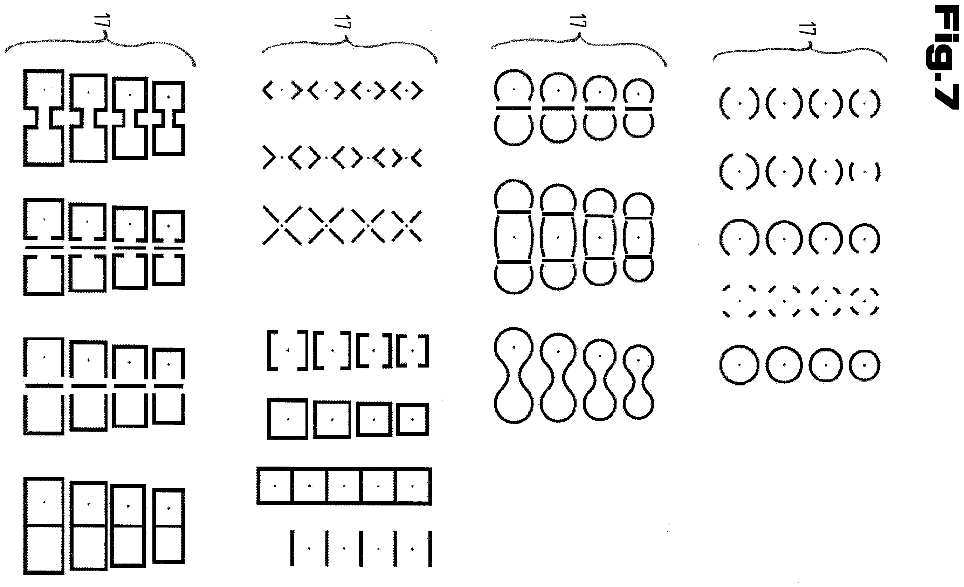

In Fig. 7 sind zahlreiche Beispiele für mögliche haptische Markierungen 17, bzw. für zweckmäßige haptische Ausgestaltungen solcher Markierungen 17 angegeben. Grundsätzlich wird die haptische Ausgestaltung bzw. Form der taktil wahrnehmbaren Markierungen auf der Sensorfläche 5 des Posistionserfassungssensors zweckmäßigerweise derart gewählt bzw. ausgeführt, dass in erster Linie das Auffinden der zugeordneten Auswahlfelder ohne visuelle Unterstützung ermöglicht ist bzw. wird. Das heißt, die Form einer solchen haptisch wahrnehmbaren Markierung enthält eine Information über das Auswahlfeld, welches durch die Markierung gekennzeichnet ist. Weiters kann die Form einer solchen Markierung auch derart ausgestaltet sein, dass sie eine folgende Bedienhandlung kennzeichnet und/oder erleichtert.

Insbesondere wird eine haptische Markierung bevorzugt derart ausgestaltet, dass sie die Art oder die Richtung der für die Aktivierung der zugeordneten technischen Funktion erforderlichen charakteristischen Touch-Geste bzw. Touch-Bewegung ohne visuelle Unterstützung erkennen lassen kann, insbesondere ertastbar macht.

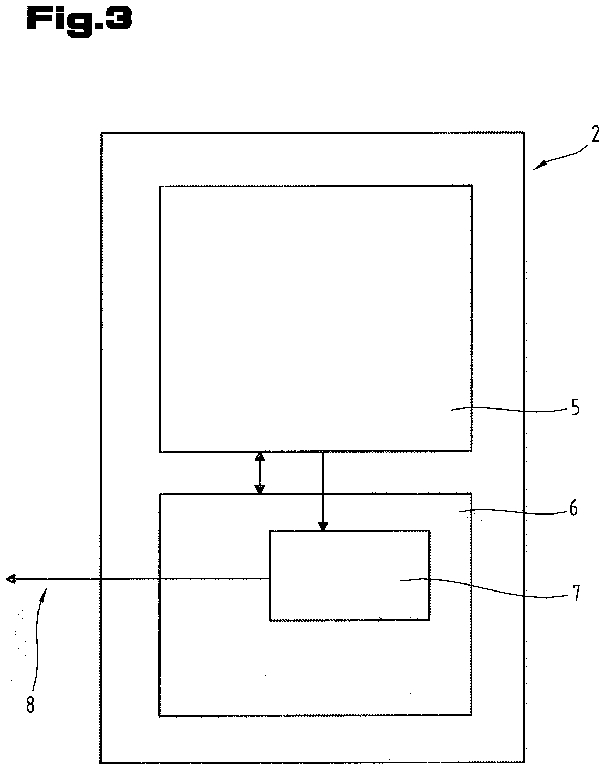

Zur Ansteuerung von beispielsweise Maschinenkomponenten, zum Beispiel einer Spritzgussmaschine 1, bzw. allgemein zum sicheren und bewussten Aktivieren von technischen Funktionen einer steuerbaren technischen Einrichtung, ist dem Bedienpanel 2 eine Steuerung 6 zugeordnet und/oder im Bedienpanel 2 ausgebildet, wie dies in Fig. 3 gezeigt ist.

Insbesondere ist dem Bedienpanel 2 eine Auswerteeinheit 7 zugeordnet, welche Auswerteeinheit 7 zur Identifizierung und Auswertung aller, aufgrund von Position und Lageänderung der Berührungspunkte vom berührungsintensiven Positionserfassungssensor des Bedienpanels 2 erfassten Bedienhandlungen identifiziert, und aufgrund der getätigten Bedienhandlungen jeweils zugeordnete technische Funktionen, insbesondere Maschinenfunktionen wie etwa Verfahrbewegungen ausführt. Zu diesem Zweck ist von der Auswerteeinheit 7 zur jeweiligen anzusteuernden technischen Einrichtung oder zu Komponenten der technischen Einrichtung, wie zum Beispiel der Spritzgussmaschine 1 in Fig. 1, jeweils eine Datenverbindung 8 eingerichtet, wie dies grundsätzlich allgemein bekannt ist.

Wie es in Fig. 3 skizziert ist, können Sensorfläche 5, Auswerteeinheit 7 und Steuerung 6 zum Beispiel gemeinsam in einem Gehäuse angeordnet bzw. montiert und miteinander verbunden sein, sodass eine transportable Bedien- und Steuerungseinheit vorliegt. Alternativ können Sensorfläche 5, Auswerteeinheit 7 und Steuerung 6 auch jeweils distanziert bzw. jeweils separat voneinander angeordnet sein und mit geeigneten datentechnischen Kommunikationsmitteln miteinander in Datenverbindung stehen.

Wesentlich für das Verfahren zum sicheren und bewussten Aktivieren von technischen Funktionen einer steuerbaren technischen Einrichtung ist die Umsetzung folgender Maßnahmen bzw. die Ausführung folgender Verfahrensschritte:
- Die permanente oder temporäre, betriebszustandsabhängige Zuordnung einer Mehrzahl von technischen Funktionen zu jeweils einer Kombination aus einem Auswahlfeld 4 und einer charakteristischen Touch-Geste bzw. Touch-Bewegung in der Auswerteeinheit 7;
- Auswahl eines Auswahlfeldes 4 durch die Bedienperson;
- Ausführen einer charakteristischen Touch-Geste bzw. Touch-Bewegung durch die Bedienperson;
- Auslösen oder Steuern der technischen Funktion welche der Kombination aus Auswahlfeld und Touch-Geste bzw. Touch-Bewegung zugeordnet ist durch die Auswerteeinheit 7.

Unter einer Touch-Geste wird dabei im Wesentlichen die Bewegung eines gebildeten Berührungspunktes auf der Sensorfläche verstanden. Da bei einer solchen Bewegung eine gewisse Platzerfordernis besteht, kann es zweckmäßig sein, wenn das Bedienpanel 2 eine verhältnismäßig großflächige Sensorfläche 5 aufweist.

Zur Erleichterung der Bedienbarkeit des Bedienpanels 2 bzw. zur Verbesserung der Durchführbarkeit des Verfahrens zum sicheren und bewussten Aktivieren bzw. Auslösen von Funktionen und/oder Bewegungen einer steuerbaren technischen Einrichtung sind die im Folgenden beschriebenen, weitere Ausgestaltungformen des Bedienpanels 2 von Vorteil.

In einer Ausgestaltungsform wird das Bedienpanel 2 derart ausgestaltet, dass zwei oder mehrere, funktional zusammengehörende, insbesondere komplementäre technische Funktionen einer Mehrzahl unmittelbar benachbarter Auswahlfelder 4 zugeordnet sind, wobei spezifische haptische Markierungen am Bedienpanel 2 die funktionale Zusammengehörigkeit der Auswahlfelder 4 ohne visuelle Unterstützung erkennbar, insbesondere ertastbar machen.

Zusätzlich und/oder alternativ kann es von Vorteil sein, dass wenn zwei oder mehrere, funktional zusammengehörende, insbesondere komplementäre technische Funktionen einer Mehrzahl unmittelbar benachbarter Auswahlfelder 4 zugeordnet sind spezifische haptische Markierungen am Bedienpanel 2 ausgebildet sind, welche die jeweiligen Auswahlfelder 4 unterscheidbar machen.

Zur Verbesserung der Übersichtlichkeit, und damit zur Erhöhung des Bedienkomforts für eine Bedienperson kann es weiters zweckmäßig sein, jeweils kleinere Teilmengen der Gesamtmenge von Auswahlfeldern 4 in Gruppen, insbesondere zeilen- oder spaltenartig am Bedienpanel 2 anzuordnen, wobei die einzelnen Gruppen von Auswahlfeldern 4 zu einander deutlich ertastbar beabstandet sind. Dies ist insbesondere in Fig. 2 veranschaulicht.

Die Auswerteeinheit 7 ist grundsätzlich dem Bedienpanel 2 zugeordnet, und zur Erfassung der Entstehung und der Position beziehungsweise der Positionsänderung von Berührungspunkten am Bedienpanel bzw. dessen Sensorfläche 4 ausgebildet, weiters gegebenenfalls zur Erfassung weiterer, von der Sensorfläche 4 des Bedienpanels 2 sensorisch erfassbarer Charakteristiken wie beispielsweise der Betätigungskraft, der Größe oder der Aufstandsfläche eines Berührpunktes oder der Temperatur von Berührpunkten, sowie zur Umsetzung dieser erfassten Informationen zueinander in zeitliche und örtliche Beziehung, ausgebildet.
Insbesondere aktiviert die Auswerteeinheit 7 bei Detektion einer vordefinierten Auslösebeziehung, welche charakterisiert ist durch die Zuordnung einer technischen Funktion zu einer Kombination aus Auswahl eines Auswahlfelds und einer von einer Bedienperson ausgeführten, charakteristischen Touch-Geste bzw. Touch-Bewegung am Bedienpanel 2, die dieser Auslösebeziehung zugeordnete technischen Funktion, bzw. löst die Auswerteeinheit 7 diese technische Funktion aus.

Durch diese Ausgestaltungsform des Bedienpanels 2 bzw. die weiter oben beschriebene Ausführung des mit dem Bedienpanel 2 durchführbaren Verfahrens, wird somit eine Funktion einer technischen Einrichtung nur dann ausgeführt, wenn von einer Bedienperson bewusst ein Auswahlfeld 4 auf der Sensorfläche 5 ausgewählt wird, und anschließend von der Bedienperson zusätzlich eine bestimmte, charakteristische Touch-Geste bzw. Touch-Bewegung auf der Sensorfläche 5 ausgeführt wird. Durch die Auswahl des Auswahlfeldes 4 wird zuerst die Menge der ausführbaren technischen Funktionen auf die diesem Auswahlfeld 4 zugewiesenen Funktionen eingeschränkt. Aus dieser eingeschränkten Menge an ausführbaren, technischen Funktionen kann die Bedienperson anschließend durch Durchführen einer bestimmten Touch-Geste eine dieser ausführbaren Funktionen aktivieren bzw. Auslösen. Das letztendliche Aktivieren einer technischen Funktion erfordert also zwei Bedienhandlungen durch die Bedienperson.

Dabei kann es sinnvoll sein, dass einem Auswahlfeld mehrere, insbesonders komplementäre technischen Funktionen zugeordnet sind, welche durch unterschiedliche, vorzugsweise komplementäre Touch-Gesten bzw. Touch-Bewegungen ausgelöst werden.

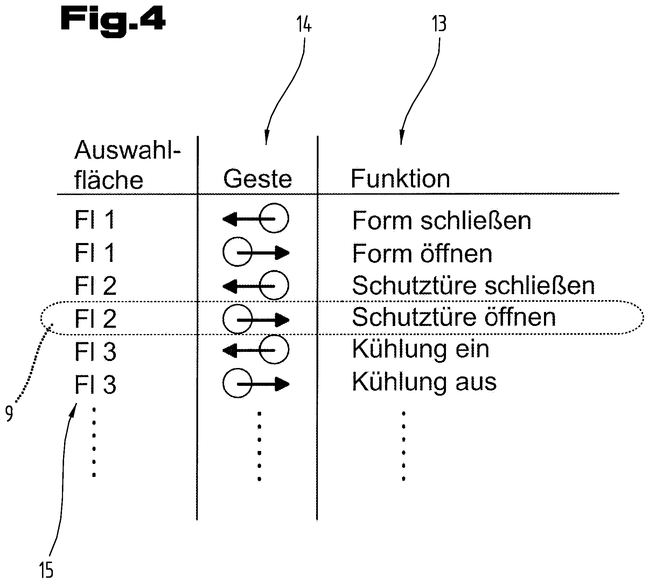

In Fig. 4 sind tabellarisch einige Beispiele für solche komplementären, technischen Funktionen 13 angegeben, wobei die im obenstehenden Text als "Auswahlfeld 4" bezeichneten Elemente in der Fig. 4 als "Auswahlfläche 15" bezeichnet sind. Die Begriffe "Auswahlfeld" und "Auswahlfläche" sind als gleichbedeutend zu interpretieren.

Die jeweilige technische Funktion 13 ergibt sich dabei jeweils durch die in der Auswerteeinheit des Bedienpanels festgelegte Auslösebeziehung 9 aus der Kombination aus (i) Auswahl einer Auswahlfläche 15 bzw. Auswahlfeldes und (ii) Durchführung einer für diese Auswahlfläche 15 gültigen Touch-Geste 14.

So könnte eine Bedienperson beispielsweise zunächst durch Auswahl der Auswahlfläche 15 mit der Nummer "3" in Fig. 4, die durchführbaren technischen Funktionen 13 auf die beiden komplementären Funktionen "Kühlung ein" und "Kühlung aus" einschränken. Anschließend könnte die Bedienperson durch Ausführen einer der beiden gültigen Touch-Gesten 14 "Ziehen des gebildeten Berührungspunktes nach links" oder "Ziehen des gebildeten Berührungspunktes nach rechts" die jeweilige technische Funktion aktivieren.

Als weiteres Beispiel könnte, wie durch die gepunktete Umrandung in Fig. 4 hervorgehoben ist, eine Bedienperson durch Auswahl der Auswahlfläche 15 mit der Nummer "2" in der Tabelle und anschließendem Durchführen der dieser Auswahlfläche 15 zugeordneten Touch-Geste 14 "Ziehen des gebildeten Berührpunktes nach rechts", die Auslösebeziehung 9 erfüllen, wodurch die technische Funktion 13 "Schutztüre öffnen" durch die Auswerteeinheit aktiviert wird.

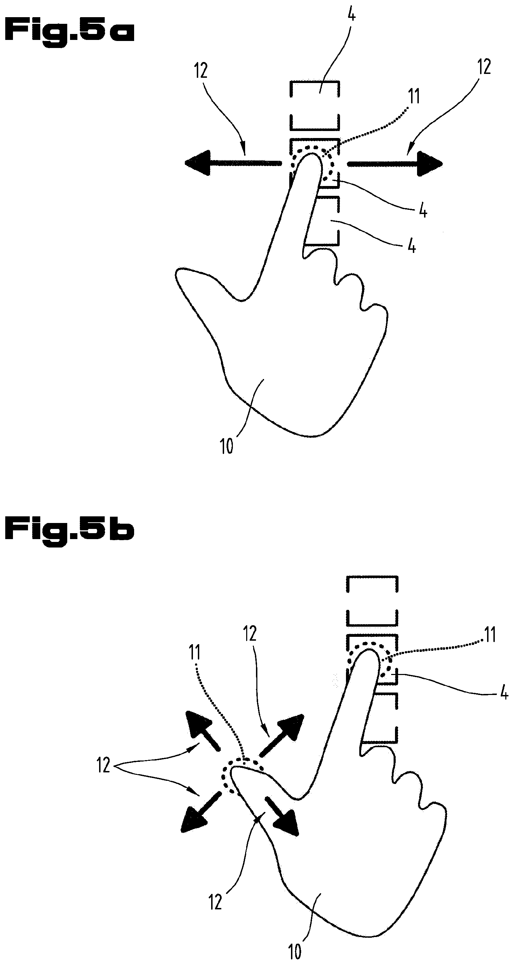

Der jeweils erste Schritt des Verfahrens zum sicheren und bewussten Aktivieren von technischen Funktionen einer steuerbaren technischen Einrichtung, also die Auswahl eines Auswahlfeldes 4 bzw. einer Auswahlfläche 15, kann dabei auf verschiedene Art und Weise erfolgen:
Eine besonders effiziente und einfach auszuführende Methode zur Auswahl eines Auswahlfeldes 4 ist das schlichte Aufsetzen eines Fingers innerhalb eines Auswahlfeldes, wobei das bloße Überstreichen des Bedienpanels beziehungsweise eines Auswahlfeldes 4 hingegen noch nicht zu dessen Auswahl führt, wie dies beispielsweise in den Fig. 5a und 5b gezeigt ist. In dieser beispielhaften Ausführungsform wird somit ein Auswahlfeld dadurch ausgewählt, dass eine Bedienperson etwa mit einem Finger der Hand 10 direkt ein Auswahlfeld 4 berührt und damit einen ersten Berührpunkt 11 bzw. eine erste Berührungsfläche in diesem Auswahlfeld 4 generiert.

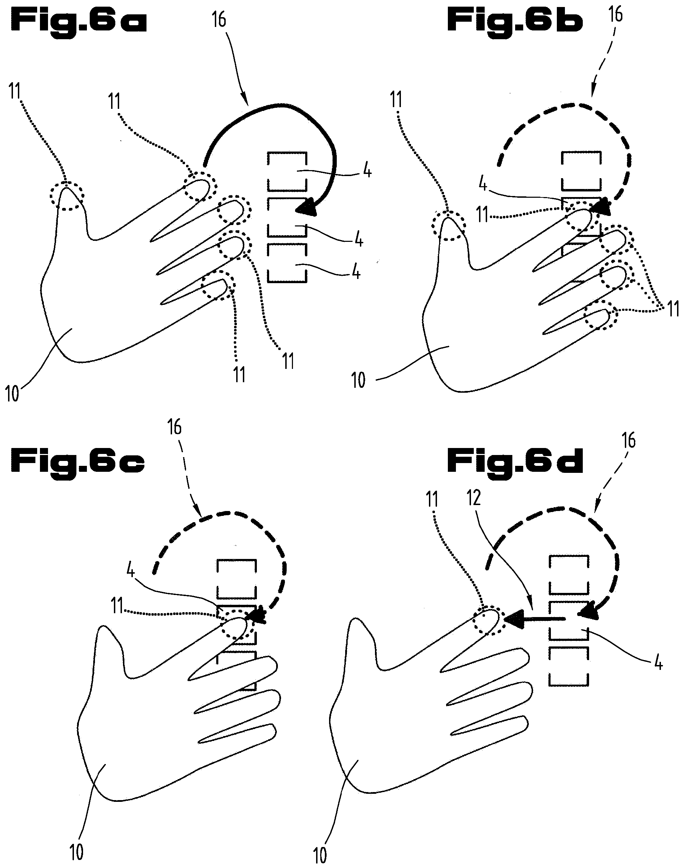

Alternativ kann die Auswahl eines Auswahlfeldes 4 auch dadurch erfolgen, dass die Bedienperson mit mehreren Fingern seiner Hand mehrere Berührpunkte 11 irgendwo auf der Sensorfläche des Bedienpanels bildet, und diese Berührpunkte 11 solange auf der Sensorfläche verschiebt, bis einer der Finger bzw. einer der gebildeten Berührpunkte 11 durch entsprechendes Ertasten mit Hilfe der auf der Sensorfläche befindlichen Markierungen im gewünschten Auswahlfeld 4 befindlich ist. Dieser schematische Verfahrensablauf ist aus kombinierter Betrachtung der Fig 6a und 6b bzw. durch Verfolgen der mit einem Pfeil angedeuteten, beispielhaften Suchbewegung 16 klar ersichtlich.

Die eigentliche Auswahl des entsprechenden Auswahlfeldes 4 kann anschließend dadurch erfolgen, dass die Bedienperson alle Finger der Hand 10, welche sich nicht auf dem gewünschten Auswahlfeld 4 befinden von der Sensorfläche abhebt, und somit alle nicht im gewünschten Auswahlfeld 4 befindlichen Berührungspunkte 11 gelöscht werden bzw. verschwinden, wie es in der Fig. 6c skizziert ist.

Das anschließende, eigentliche Auslösen bzw. Aktivieren einer technischen Funktion kann nach Auswahl des entsprechenden Auswahlfeldes 4 beispielsweise durch einfaches Herausziehen des Fingers der Hand 10, und somit des Verschiebens des gebildeten, ersten Berührpunktes 11 aus dem gewählten Auswahlfeld 4, das heißt durch eine entsprechende Touch-Geste 12 im Sinne einer sogenannten "Drag-Geste" erfolgen. Dabei kann vorgesehen sein, dass diese Touch-Geste 12 in jede beliebige Richtung erfolgen kann, was insbesondere dann zur Anwendung kommen kann, wenn dem entsprechenden Auswahlfeld 4 lediglich eine einzige technische Funktion zugeordnet ist.

Grundsätzlich kann es von Vorteil sein, dass beim Auslösen einer technischen Funktion durch Auswahl eines Auswahlfeldes und Ausführen einer Touch-Geste bzw. Touch-Bewegung, zumindest eine weitere technische Funktion automatisiert aktiviert bzw. ausgelöst wird. Diese Verfahrensmaßnahme wird insbesondere dann zum Einsatz kommen, wenn eine bestimmte technische Funktion das Ausführen einer anderen Funktion zwingend erfordert.

Unabhängig davon können den unterschiedlichen Auswahlfeldern 4 des Bedienpanels 2 selbstverständlich jeweils unabhängig voneinander eine unterschiedliche Anzahl an Touch-Gesten 12 zugeordnet sein, welche Touch-Gesten 12 wieder jeweils unabhängig voneinander in bestimmte Richtungen erfolgen können, wie es am besten aus den Fig. 5a und 5b ersichtlich ist. Die Art, Form und/oder Richtung einer solchen Touch-Geste 12 richtet sich dabei sinnvollerweise nach der durch sie aktivierbaren, bzw. dem jeweiligem Auswahlfeld 4 zugeordneten technischen Funktionen.

So kann es sinnvoll sein, dass das Aktivieren einer technischen Funktion durch eine Touch-Geste erfolgt, welche das Herausziehen des Fingers bzw. des gebildeten, ersten Berührpunktes aus dem Auswahlfeld in ein benachbartes Auswahlfeld erfordert.

Weiters ist es möglich, dass die charakteristische Touch-Geste 12 bzw. Touch-Bewegung zum Auslösen einer einem Auswahlfeld zugeordneten technischen Funktion das Herausziehen des Fingers bzw. des gebildeten, ersten Berührpunktes 11 aus dem Auswahlfeld 4 in eine bestimmte Richtung ist, wie dies beispielsweise in der Fig. 5a gezeigt ist. Dadurch können jeweils unterschiedliche, einem Auswahlfeld 4 zugeordnete, technische Funktionen, aktiviert werden. Eine bestimmte, vordefinierte Richtung in welcher der erste Berührpunkt dabei verschoben wird, kann sich dabei auf das Panel oder auf die Form des Auswahlfeldes oder dessen haptischer Markierung beziehen.

In der Fig. 5b ist eine weitere und gegebenenfalls für sich eigenständige Ausführungsform des Verfahrens zum sicheren und bewussten Aktivieren bzw. Auslösen von Funktionen und/oder Bewegungen einer steuerbaren technischen Einrichtung gezeigt, wobei wiederum für gleiche Teile gleiche Bezugszeichen bzw. Bauteilbezeichnungen wie in den vorangegangenen Fig. 1-5a verwendet werden. Um unnötige Wiederholungen zu vermeiden, wird auf die detaillierte Beschreibung in den vorangegangenen Fig. 1-5a hingewiesen bzw. Bezug genommen.

Wie es in der Fig.5b gezeigt ist, kann es vorgesehen sein, dass die charakteristische Touch-Geste 12 bzw. Touchbewegung zum Auslösen einer einem Auswahlfeld 4 zugeordneten technischen Funktion, die Bildung eines zweiten Berührpunktes 11 bzw. einer zweiten Berührfläche in der Nähe des ersten Berührpunktes 11, welcher sich im Auswahlfeld 4 befindet, und die anschließende Bewegung dieses zweiten Berührpunktes 11 in eine definierte Richtung, relativ zum ersten Berührpunkt 11, ist.

Hierzu ist es erforderlich, dass der berührungssensitive Positionserfassungssensor zur gleichzeitigen Erfassung und Bewegungsverfolgung von mehreren Berührpunkten 11 ausgebildet ist, und die Auswerteeinheit eine Mehrzahl von gleichzeitig detektierten Berührpunkten im Wesentlichen gleichzeitig und unabhängig voneinander auswerten kann.

Eine weitere vorteilhafte Ausführungsform für bestimmte auslösbare, technische Funktionen sieht vor, dass die definierte Bewegung eines zweiten Berührpunktes relativ zum einem ersten Berührungspunkt charakterisiert ist durch Vergrößern oder durch Verkleinern des Abstandes des zweiten Berührpunktes relativ zum ersten Berührpunkt im Wesentlichen entlang einer gedachten Linie zwischen dem ersten und dem zweiten Berührungspunkt, oder durch Bewegen des zweiten Berührpunktes senkrecht zu einer gedachten Linie zwischen dem ersten und zweiten Berührpunkt.

Zur Verbesserung der Betriebssicherheit einer technischen Einrichtung ist es dabei vorteilhaft, wenn eine so aktivierte technische Funktion dadurch abgebrochen werden kann, dass der den zweiten Berührpunkt bildenden Finger von der Sensorfläche abgehoben wird beziehungsweise der zweite Berührpunkt verschwindet.

Die Ausführungsbeispiele zeigen mögliche Ausführungsvarianten des Verfahrens zum sicheren und bewussten Aktivieren bzw. Auslösen von Funktionen und/oder Bewegungen einer steuerbaren technischen Einrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

So kann eine generelle Verbesserung der Verfahrenssicherheit beispielsweise dadurch erreicht werden, dass eine aktivierte technische Funktion, bzw. eine ausgelöste Maschinenfunktion abgebrochen bzw. eine ausgelöste Verfahrbewegung gestoppt wird, sobald der den ersten Berührpunkt bildende Finger von der Sensorfläche abgehoben wird und der erste Berührpunkt verschwindet.

Alternativ und/oder zusätzlich kann auch vorgesehen sein, dass eine aktivierte technische Funktion, eine ausgelöste Maschinenfunktion abgebrochen bzw. eine ausgelöste Verfahrbewegung gestoppt wird, sobald eine zur charakteristischen Touch-Geste bzw. Touchbewegung zugeordnete inverse Touch-Geste bzw. Touchbewegung ausgeführt wird.

Eine Variante zur nochmaligen Verbesserung der Verfahrenssicherheit sieht vor, dass nach der Auswahl eines Auswahlfeldes die Position des ersten Berührpunktes im Auswahlfeld für eine definierte Zeitspanne, insbesondere für eine Zeitspanne aus dem Bereich von 0.05 s bis 0.5s, im Wesentlichen unveränderlich bleiben muss, damit die Auswerteeinheit eine anschließende Touch-Geste bzw. Touchbewegung als gültige, charakteristische Touch-Geste zulässt bzw. als solche erkennt und die zugeordnete technische Funktion ausführt.

Als nützliche, unterstützende Maßnahme kann schließlich ein zusätzlicher Verfahrensschritt implementiert sein, welcher dadurch charakterisiert ist, dass eine von der Auswerteeinheit erkannte Auswahl eines Auswahlfeldes und/oder das Aktivieren einer technischen Funktion durch ein haptisch, akustisch oder visuell wahrnehmbares Signal, insbesondere durch kurze Vibration oder einen mechanischen Impuls an der Sensorfläche und/oder durch ein auch aus den Augenwinkeln wahrnehmbares Blinksignal und/oder ein akustisches Signal, an die Bedienperson signalisiert wird.

Abschließend sei festgehalten, dass Einzelmerkmale oder Merkmalskombinationen aus den gezeigten und beschriebenen unterschiedlichen Ausführungsbeispielen für sich eigenständige, erfinderische oder erfindungsgemäße Lösungen darstellen können. Die den eigenständigen erfinderischen Lösungen zugrundeliegende Aufgabe kann der Beschreibung entnommen werden.

Vor allem können die einzelnen in den Fig. 1-7 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei schließlich noch darauf hingewiesen, dass zum besseren Verständnis die in den Fig.1-3 und 7 gezeigten Ausführungsformen des Bedienpanels teilweise unmaßstäblich und/oder vergrößert und/oder verkleinert dargestellt wurden.

### Bezugszeichenaufstellung

- 1: Spritzgießmaschine
- 2: Bedienpanel
- 3: Bedienoberfläche
- 4: Auswahlfeld
- 5: Sensorfläche
- 6: Steuerung
- 7: Auswerteeinheit
- 8: Datenverbindung
- 9: Auslösebeziehung
- 10: Hand
- 11: Berührpunkt
- 12: Touch-Geste
- 13: Funktion
- 14: Touch-Geste
- 15: Auswahlfläche
- 16: Suchbewegung
- 17: haptische Markierungen

## Patentansprüche

1. Verfahren zum sicheren und bewussten Aktivieren oder Auslösen von Maschinenfunktionen, insbesondere von Verfahrbewegungen einer Maschine, wie zum Beispiel eines Roboters oder einer Anlage durch eine Bedienperson
via ein Bedienpanel mit einem berührungssensitiven Positionserfassungssensor zur Erfassung der Position von Berührpunkten oder deren Lageänderungen, insbesondere in der Art eines Touchpanels oder Touch-Screens,
welche Berührpunkte durch den Kontakt von Fingern oder Teilen der Hand einer Bedienperson mit der Sensorfläche des berührungssensitiven Positionserfassungssensors gebildet werden,
wobei mehrere Auswahlfelder als jeweils zusammenhängender Teilbereich der Sensorfläche des Positionserfassungssensors definiert sind,
weiters auf der Sensorfläche des berührungssensitiven Positionserfassungssensors haptisch wahrnehmbare Markierungen aufgebracht sind, mit denen die jeweilige Lage der Auswahlfelder ohne visuelle Unterstützung von der Bedienperson ertastbar und auffindbar ist, und
das Bedienpanel eine Auswerteeinheit aufweist oder dem Bedienpanel eine Auswerteeinheit zugeordnet ist, welche Auswerteeinheit die an dem Bedienpanel vorgenommenen Bedienhandlungen bzw. vom berührungssensitiven Positionserfassungssensor anhand der Position und Lageänderung der detektierten Berührpunkte erfassten Bedienhandlungen identifiziert und jeweils zugeordnete Maschinenfunktionen, insbesondere Verfahrbewegungen ausführt oder steuert,
**gekennzeichnet durch** die Schritte:
- permanente oder betriebszustandsabhängig temporäre Zuordnung einer Mehrzahl von Maschinenfunktionen zu jeweils einer Kombination aus einem Auswahlfeld und einer charakteristischen Touch-Geste bzw. Touch-Bewegung durch die Auswerteeinheit;
- Auswahl eines Auswahlfeldes durch die Bedienperson durch Hineinziehen eines Fingers auf der Sensorfläche in das jeweilige Auswahlfeld zur Bildung eines ersten Berührungspunktes, während gleichzeitig weitere Finger weitere Berührpunkte auf der Sensorfläche herstellen und sodann die weiteren Finger von der Sensorfläche abgehoben werden, während der Finger innerhalb des Auswahlfeldes den Kontakt beibehält, wodurch die Auswerteeinheit die Auswahl dieses Feldes erkennt und akzeptiert;
- anschließend Ausführen einer charakteristischen Touch-Geste bzw. Touch-Bewegung durch die Bedienperson;
- Auslösen oder Steuern der Maschinenfunktion welche der Kombination aus Auswahlfeld und Touch-Geste bzw. Touch-Bewegung zugeordnet ist durch die Auswerteeinheit.

2. Verfahren nach Anspruch 1, **dadurch gekennzeichnet, dass** einem Auswahlfeld mehrere, vorzugsweise komplementäre Maschinenfunktionen zugeordnet sind, welche durch unterschiedliche, vorzugsweise komplementäre Touch-Gesten bzw. Touch-Bewegungen ausgelöst werden.

3. Verfahren nach Anspruch 1 oder 2, **dadurch gekennzeichnet, dass** eine charakteristische Touch-Geste bzw. Touch-Bewegung zum Auslösen einer einem Auswahlfeld zugeordneten Maschinenfunktion das Herausziehen des Fingers bzw. des gebildeten, ersten Berührpunktes aus dem Auswahlfeld ist.

4. Verfahren nach Anspruch 3, **dadurch gekennzeichnet dass** die charakteristische Touch-Geste bzw. Touch-Bewegung zum Auslösen einer einem Auswahlfeld zugeordneten Maschinenfunktion das Herausziehen des Fingers bzw. des gebildeten, ersten Berührpunktes aus dem Auswahlfeld in eine bestimmte Richtung ist.

5. Verfahren nach Anspruch 3 oder 4, **dadurch gekennzeichnet dass** die charakteristische Touch-Geste bzw. Touch-Bewegung zum Auslösen einer einem Auswahlfeld zugeordneten Maschinenfunktion das Herausziehen des Fingers bzw. des gebildeten, ersten Berührpunktes aus dem Auswahlfeld in ein benachbartes Auswahlfeld ist.

6. Verfahren nach Anspruch 1 oder 2, **dadurch gekennzeichnet, dass** der berührungssensitive Positionserfassungssensor gleichzeitig mehrerer Berührpunkte erfasst, und dass die charakteristische Touch-Geste bzw. Touch-Bewegung zum Auslösen einer einem Auswahlfeld zugeordneten technischen Funktion das Bilden eines zweiten Berührpunktes in der Nähe des ersten Berührpunktes und die anschließende Bewegung des zweiten Berührpunktes in eine definierte Richtung ist.

7. Verfahren nach Anspruch 6, **dadurch gekennzeichnet, dass** die definierte Bewegung des zweiten Berührpunktes relativ zum ersten Berührungspunkt charakterisiert ist durch Vergrößern oder durch Verkleinern des Abstandes zum ersten Berührpunkt im Wesentlichen entlang einer gedachten Linie zwischen dem ersten und dem zweiten Berührungspunkt, oder durch Bewegen des zweiten Berührpunktes senkrecht zu einer gedachten Linie zwischen dem ersten und zweiten Berührpunkt.

8. Verfahren nach Anspruch 6 oder 7, **dadurch gekennzeichnet, dass** die aktivierte bzw. ausgelöste Maschinenfunktion abgebrochen bzw. eine Verfahrbewegung gestoppt wird, sobald der den zweiten Berührpunkt bildende Finger von der Sensorfläche abgehoben wird und der zweite Berührpunkt verschwindet.

9. Verfahren nach einem der Ansprüche 1 bis 8, **dadurch gekennzeichnet, dass** die aktivierte bzw. ausgelöste Maschinenfunktion abgebrochen bzw. eine ausgelöste Verfahrbewegung gestoppt wird, sobald der den ersten Berührpunkt bildenden Finger von der Sensorfläche abgehoben wird und der erste Berührpunkt verschwindet.

10. Verfahren nach einem der Ansprüche 1 bis 9, **dadurch gekennzeichnet, dass** eine aktivierte bzw. ausgelöste Maschinenfunktion bzw. eine ausgelöste Verfahrbewegung gestoppt wird, sobald eine zur charakteristischen Touch-Geste bzw. Touchbewegung zugeordnete inverse Touch-Geste bzw. Touch-Bewegung ausgeführt wird.

11. Verfahren nach einem der Ansprüche 1 bis 10, **dadurch gekennzeichnet, dass** nach der Auswahl eines Auswahlfeldes die Position des ersten Berührpunktes im Auswahlfeld für eine definierte Zeitspanne, insbesondere für eine Zeitspanne aus dem Bereich von 0.05 s bis 0.5s, im Wesentlichen unveränderlich bleiben muss, damit die Auswerteeinheit eine anschließende Touch-Geste bzw. Touch-Bewegung als gültige, charakteristische Touch-Geste zulässt bzw. als solche erkennt und die zugeordnete Maschinenfunktion ausführt.

12. Verfahren nach einem der Ansprüche 1 bis 11, **dadurch gekennzeichnet, dass** die von der Auswerteeinheit erkannte Auswahl eines Auswahlfeldes und/oder das Aktivieren einer Maschinenfunktion durch ein haptisch, akustisch oder visuell wahrnehmbares Signal, insbesondere durch kurze Vibration oder einen mechanischen Impuls an der Sensorfläche oder durch ein auch aus den Augenwinkeln wahrnehmbares Blinksignal oder ein akustisches Signal, an die Bedienperson signalisiert wird.

13. Bedienpanel zur Durchführung eines Verfahrens nach einem der Ansprüche 1 bis 12, aufweisend einen berührungssensitiven Positionserfassungssensor, insbesondere in der Art eines Touchpanels oder Touch-Screens zur Detektion der Position von mehreren Berührpunkten, welche von Fingern oder Teilen der Hand einer Bedienperson auf der Sensorfläche des berührungssensitiven Positionserfassungssensors gebildet werden, sowie zur Detektion von Positionsänderungen dieser Berührungspunkte,
wobei auf der Sensorfläche des Bedienpanels Auswahlfelder als jeweils zusammenhängende Zonen oder Teilbereiche der Sensorfläche festgelegt sind und auf der Sensorfläche haptisch wahrnehmbare Markierungen aufgebracht sind, mit denen die Auswahlfelder ohne visuelle Unterstützung von einer Bedienperson ertastet beziehungsweise aufgefunden werden können, und
wobei das Bedienpanel eine Auswerteeinheit aufweist oder dem Bedienpanel eine Auswerteeinheit zugeordnet ist, welche Auswerteeinheit zur Erfassung der Entstehung und der Position beziehungsweise der Positionsänderung der Berührungspunkte, sowie gegebenenfalls zu Erfassung weiterer, vom Bedienpanel sensorisch erfassbare Charakteristiken, wie beispielsweise der Betätigungskraft, der Größe oder der Aufstandsfläche eines Berührpunktes oder der Temperatur von Berührpunkten, ausgebildet ist, und
diese erfassten Daten zueinander in zeitliche und örtliche Beziehung setzt, und bei Detektion einer vordefinierten Auslösebeziehung, welche charakterisiert ist durch die Zuordnung einer Maschinenfunktion zu einer Kombination aus der von der Bedienperson zu tätigenden Auswahl eines Auswahlfelds durch Hineinziehen eines Fingers auf der Sensorfläche in das jeweilige Auswahlfeld zur Bildung eines ersten Berührungspunktes, während gleichzeitig weitere Finger weitere Berührpunkte auf der Sensorfläche herstellen und sodann die weiteren Finger von der Sensorfläche abgehoben werden, während der Finger innerhalb des Auswahlfeldes den Kontakt beibehält, wodurch die Auswerteeinheit die Auswahl dieses Feldes erkennt und akzeptiert, wobei die Auslösebeziehung zudem eine anschließend von einer Bedienperson auszuführende, charakteristische Touch-Geste bzw. Touch-Bewegung am Bedienpanel umfasst, zur Aktivierung der dieser Auslösebeziehung zugeordneten Maschinenfunktion ausgebildet ist.

14. Bedienpanel nach Anspruch 13, **dadurch gekennzeichnet, dass** die haptisch wahrnehmbaren Markierungen derart gestaltet sind, dass sie durch an der Oberfläche des Bedienpanels ausgebildete Führungen für einen Finger oder andere Teile der Hand der Bedienperson die Art oder die Richtung der für die Aktivierung der zugeordneten Maschinenfunktion erforderlichen charakteristischen Touch-Geste bzw. Touch-Bewegung ohne visuelle Unterstützung erkennen lassen, insbesondere ertastbar machen.

15. Bedienpanel nach Anspruch 13 oder 14, **dadurch gekennzeichnet, dass** zwei oder mehrere, funktional zusammengehörende, insbesondere komplementäre Maschinenfunktionen einer Mehrzahl unmittelbar benachbarter Auswahlfelder zugeordnet sind, wobei spezifische haptische Markierungen am Bedienpanel die funktionale Zusammengehörigkeit der Auswahlfelder ohne visuelle Unterstützung erkennbar, insbesondere ertastbar machen, und/oder die jeweiligen Auswahlfelder unterscheidbar machen.

## Claims

1. A method for securely and intentionally activating or initiating machine functions, in particular traversing movements of a machine, such as a robot or a plant for example, by an operator
via a control panel having a touch-sensitive position detection sensor for detecting the position of touch points or changes in their position, in particular in the form of a touch panel or touchscreen,
which touch points are created by the contact of fingers or parts of the hand of an operator with the sensor surface of the touch-sensitive position detection sensor, wherein multiple selection fields are defined as respectively connected partial areas of the sensor surface of the position detection sensor,
furthermore, haptically perceptible markings are applied to the sensor surface of the touch-sensitive position detection sensor, by means of which markings the respective position of the selection fields can be felt and found by the operator without visual aid, and
the control panel has an evaluation unit or an evaluation unit is assigned to the control panel, which evaluation unit identifies the operating actions undertaken on the control panel and/or operating actions detected by the touch-sensitive position detection sensor on the basis of the position and change in position of the detected touch points, and performs or controls respectively assigned machine functions, in particular traversing movements,
**characterized by** the steps:
- permanent or, depending on an operating state, temporary assignment of a plurality of machine functions, in each case to a combination of a selection field and a characteristic touch gesture and/or touch movement by the evaluation unit;
- selecting a selection field by the operator by dragging a finger on the sensor surface into the respective selection field to create a first touch point, whilst simultaneously creating further touch points on the sensor surface with other fingers, and then lifting the other fingers off the sensor surface whilst the finger inside the selection field maintains the contact, whereby the evaluation unit recognizes and accepts the selection of said field;
- subsequently performing a characteristic touch gesture and/or touch movement by the operator;
- initiating or controlling the machine function assigned to the combination of selection field and touch gesture and/or touch movement by the evaluation unit.

2. The method according to claim 1, **characterized in that** multiple, preferably complementary, machine functions are assigned to a selection field, which machine functions are initiated by different, preferably complementary, touch gestures and/or touch movements.

3. The method according to claim 1 or 2, **characterized in that** a characteristic touch gesture and/or touch movement for initiating a machine function assigned to a selection field involves dragging the finger and/or the first touch point created out of the selection field.

4. The method according to claim 3, **characterized in that** the characteristic touch gesture and/or touch movement for activating a machine function assigned to a selection field involves dragging the finger and/or the first touch point created out of the selection field in a specific direction.

5. The method according to claim 3 or 4, **characterized in that** the characteristic touch gesture and/or touch movement for activating a machine function assigned to a selection field involves dragging the finger and/or the first touch point created out of the selection field into an adjacent selection field.

6. The method according to claim 1 or 2, **characterized in that** the touch-sensitive position detection sensor detects multiple touch points simultaneously, and that the characteristic touch gesture and/or touch movement for activating a technical function assigned to a selection field involves creating a second touch point in the vicinity of the first touch point and the subsequent movement of the second touch point in a defined direction.

7. The method according to claim 6, **characterized in that** the defined movement of the second touch point relative to the first touch point is **characterized by** increasing or reducing the distance from the first touch point essentially along an imaginary line between the first and the second touch point, or by moving the second touch point vertically with respect to an imaginary line between the first and second touch point.

8. The method according to claim 6 or 7, **characterized in that** the activated and/or initiated machine function is terminated and/or a traversing movement is stopped as soon as the finger creating the second touch point is lifted off the sensor surface and the second touch point disappears.

9. The method according to one of claims 1 to 8, **characterized in that** the activated and/or initiated machine function is terminated and/or an initiated traversing movement is stopped as soon as the finger creating the first touch point is lifted off the sensor surface and the first touch point disappears.

10. The method according to one of claims 1 to 9, **characterized in that** an activated and/or initiated machine function and/or an initiated traversing movement is stopped as soon as an inverse touch gesture and/or touch movement assigned to the characteristic touch gesture and/or touch movement is made.

11. The method according to one of claims 1 to 10, **characterized in that** after selecting a selection field, the position of the first touch point in the selection field must remain essentially unchanging for a defined period of time, in particular for a period of time in the range of 0.05 s to 0.5 s, so that the evaluation unit permits a subsequent touch gesture and/or touch movement as a valid, characteristic touch gesture and/or recognizes it as such and performs the assigned machine function.

12. The method according to one of claims 1 to 11, **characterized in that** the selection of a selection field and/or the activation of a machine function recognized by the evaluation unit is signaled to the operator by a haptically, acoustically or visually perceptible signal, in particular by a short vibration or a mechanical impulse on the sensor surface or by a flashing signal perceptible even from the corner of the eye or an acoustic signal.

13. A control panel for performing a method according to one of claims 1 to 12, comprising a touch-sensitive position detection sensor, in particular in the form of a touch panel or touchscreen, for detecting the position of multiple touch points created by fingers or parts of the hand of an operator on the sensor surface of the touch-sensitive position detection sensor and for detecting changes in position of these touch points,
wherein selection fields are determined on the sensor surface of the control panel as respectively connected zones or partial areas of the sensor surface, and haptically perceptible markings are applied to the sensor surface, by means of which markings the selection fields can be felt and/or found by an operator without visual aid, and
wherein the control panel has an evaluation unit or an evaluation unit is assigned to the control panel, which evaluation unit is configured to detect the occurrence and position and/or change in position of the touch points, and optionally to detect other characteristics that can be sensorially detected by the control panel, such as, for example, the actuating force, the size or surface area of a touch point or the temperature of touch points, and
this detected data is correlated in a relationship based on time and location, and on detection of a predefined initiation relationship **characterized by** the assignment of a machine function to a combination of the selection of a selection field to be made by an operator by dragging a finger on the sensor surface into the respective selection field to create a first touch point, whilst simultaneously creating further touch points on the sensor surface with other fingers, and then lifting the other fingers off the sensor surface whilst the finger inside the selection field maintains the contact, whereby the evaluation unit recognizes and accepts the selection of that field, wherein the initiation relationship additionally comprises a characteristic touch gesture and/or touch movement on the control panel to be subsequently performed by an operator, is configured to activate the machine function assigned to this initiation relationship.

14. The control panel according to claim 13, **characterized in that** the haptically perceptible markings are designed such that, by means of guides that are formed on the surface of the control panel for a finger or other parts of the hand of the operator, they enable the type or direction of the characteristic touch gesture and/or touch movement needed to activate the assigned machine function to be recognized, in particular felt, without visual aid.

15. The control panel according claim 13 or 14, **characterized in that** two or multiple functionally associated, in particular complementary, machine functions are assigned to a plurality of directly adjacent selection fields, wherein specific haptic markings on the control panel enable the functional association of the selection field to be recognized, in particular felt, without visual aid, and/or a distinction to be made between the respective selection fields.

## Revendications

1. Procédé d'activation ou de déclenchement sécurisé et conscient de fonctions de machines, plus particulièrement de déplacements d'une machine, par exemple d'un robot ou d'une installation par un opérateur
par l'intermédiaire d'un panneau de commande avec un capteur de détection de position tactile pour la détection de la position de points de contact ou de leurs changements de position à la manière d'un panneau tactile ou d'un écran tactile,
ces points de contacts étant formés par le contact des doigts de parties de la main d'un opérateur avec une surface de capteur du capteur de détection de position tactile,
dans lequel plusieurs champs de sélection sont définis chacun comme une partie cohérente de la surface du capteur de détection de position,
en outre, sur la surface du capteur de détection de position tactile sont appliqués des marquages perceptibles de manière haptique, avec lesquels la position des champs de sélection peut être détectée et découverte par l'opérateur sans support visuel et
le panneau de commande comprend une unité d'analyse ou au panneau de commande correspond une unité d'analyse, cette unité d'analyse identifiant les actions de commande effectuées sur le panneau de commande ou les actions de commande détectées par le capteur de détection de position tactile à l'aide de la position et du changement de position des points de contact détectés et exécutant ou contrôlant les fonctions de machine, plus particulièrement les déplacements qui correspondent, **caractérisé par** les étapes suivantes :
- attribution permanente ou temporaire, en fonction de l'état de la machine, d'une pluralité de fonctions de la machine à une combinaison constituée d'un champ de sélection et d'un geste tactile ou d'un mouvement tactile caractéristique par l'unité d'analyse ;
- sélection d'un champ de sélection par l'opérateur par le placement d'un doigt sur la surface du capteur dans le champ de sélection correspondant pour la formation d'un premier point de contact, tandis que, simultanément, d'autres doigts établissent d'autres points de contact sur la surface du capteur et les autres doigts sont ensuite retirés de la surface du capteur, tandis que le doigt à l'intérieur du champ de sélection maintient le contact, ce qui fait en sorte que l'unité d'analyse reconnaît et accepte la sélection de ce champ ;
- puis exécution d'un geste tactile ou d'un mouvement tactile caractéristique par l'opérateur ;
- déclenchement ou contrôle de la fonction de la machine qui correspond à la combinaison du champ de sélection et du geste tactile ou du mouvement tactile par l'unité d'analyse.

2. Procédé selon la revendication 1, **caractérisé en ce que**, à un champ de sélection, correspondent plusieurs fonctions de machine, de préférence complémentaires, qui sont déclenchées par des gestes tactiles ou mouvements tactiles différents, de préférence complémentaires.

3. Procédé selon la revendication 1 ou 2, **caractérisé en ce qu'**un geste tactile ou un déplacement tactile caractéristique pour le déclenchement d'une fonction de machine correspondant à un champ de sélection est le retrait du doigt ou du premier point de contact formé hors du champ de sélection.

4. Procédé selon la revendication 3, **caractérisé en ce que** le geste tactile ou le mouvement tactile caractéristique pour le déclenchement d'une fonction de machine correspondant à un champ de sélection est le retrait du doigt ou du premier point de contact formé hors du champ de sélection dans une direction déterminée.

5. Procédé selon la revendication 3 ou 4, **caractérisé en ce que** le geste tactile ou le mouvement tactile caractéristique pour le déclenchement d'une fonction de machine correspondant à un champ de sélection est le retrait du doigt ou du premier point de contact formé hors du champ de sélection vers un champ de sélection voisin.

6. Procédé selon la revendication 1 ou 2, **caractérisé en ce que** le capteur de détection de position tactile détecte plusieurs points de contact et **en ce que** le geste tactile ou le mouvement tactile caractéristique pour le déclenchement d'une fonction technique correspondant à un champ de sélection est la formation d'un deuxième point de contact à proximité du premier point de contact puis le déplacement du deuxième point de contact dans une direction définie.

7. Procédé selon la revendication 6, **caractérisé en ce que** le déplacement défini du deuxième point de contact par rapport au premier point de contact est **caractérisé par** l'agrandissement ou le rétrécissement de la distance par rapport au premier point de contact globalement le long d'une ligne imaginaire entre les premier et deuxième points de contact, ou par le déplacement du deuxième point de contact perpendiculairement à une ligne imaginaire entre les premier et deuxième points de contact.

8. Procédé selon la revendication 6 ou 7, **caractérisé en ce que** la fonction de machine activée ou déclenchée est interrompue ou un déplacement est arrêté dès que le doigt formant le deuxième point de contact est retiré de la surface du capteur et que le deuxième point de contact disparaît.

9. Procédé selon l'une des revendications 1 à 8, **caractérisé en ce que** la fonction de machine activée ou déclenchée est interrompue ou un déplacement déclenché est arrêté dès que le doigt formant le premier point de contact est retiré de la surface du capteur et que le premier point de contact disparaît.

10. Procédé selon l'une des revendications 1 à 9, **caractérisé en ce qu'**une fonction de machine activée ou déclenchée est interrompue ou un déplacement déclenché est arrêté dès qu'un geste tactile ou un mouvement tactile inverse correspondant au geste tactile ou mouvement tactile caractéristique est exécuté.

11. Procédé selon l'une des revendications 1 à 10, **caractérisé en ce que**, après la sélection d'un champ de sélection, la position du premier point de contact dans le champ de sélection doit rester globalement invariable pendant une période définie, plus particulièrement pendant une période de l'ordre de 0,05 s à 0,5 s, afin que l'unité d'analyse admette un geste tactile ou un mouvement tactile suivant comme un geste tactile caractéristique ou le reconnaisse comme tel et exécute la fonction de machine correspondante.

12. Procédé selon l'une des revendications 1 à 11, **caractérisé en ce que** la sélection, détectée par l'unité d'analyse, d'un champ de sélection et/ou l'activation d'une fonction de machine est signalée à l'opérateur par un signal perceptible de manière haptique, acoustique ou visuelle, plus particulièrement par une courte vibration ou une impulsion mécanique sur la surface du capteur ou par un signal clignotant perceptible du coin de l'œil ou un signal acoustique.

13. Panneau de commande pour l'exécution d'un procédé selon l'une des revendications 1 à 12, comprenant un capteur de détection de position tactile, plus particulièrement sous la forme d'un panneau tactile ou d'un écran tactile, pour la détection de plusieurs points de contact qui sont formés par des doigts ou des parties de la main d'un opérateur sur la surface de capteur du capteur de détection de position tactile, ainsi que pour la détection de changements de position de ces points de contact,
dans lequel, sur la surface de capteur du panneau de commande, sont définis des champs de sélection sous la forme de zones ou de parties cohérentes de la surface du capteur et sur la surface du capteur sont appliqués des marquages perceptibles de manière haptique, avec lesquels les champs de sélection peuvent être détectés respectivement découverts par un opérateur sans support visuel et
dans lequel le panneau de commande comprend une unité d'analyse ou au panneau de commande correspond une unité d'analyse, cette unité d'analyse étant conçue pour la détection de l'apparition et de la position respectivement du changement de position des points de contact, ainsi que, le cas échéant, pour la détection d'autres caractéristiques détectables par un capteur du panneau de commande, par exemple la force d'actionnement, la taille ou la surface d'appui d'un point de contact ou la température de points de contact et
mettant en relation temporelle et spatiale ces données détectées et, lors de la détection d'une relation de déclenchement prédéfinie, qui est **caractérisée par** la correspondance entre une fonction de machine et une combinaison de la sélection à effectuer d'un champ de sélection par le placement d'un doigt sur la surface du capteur dans le champ de sélection correspondant pour la formation d'un premier point de contact, tandis que, simultanément, d'autres doigts établissent d'autres points de contact sur la surface du capteur puis les autres doigts sont retirés de la surface du capteur tandis que le doigt à l'intérieur du champ de sélection maintient le contact, ce qui fait en sorte que l'unité d'analyse détecte et accepte la sélection de ce champ, dans lequel la relation de déclenchement comprend en outre un geste tactile ou un mouvement tactile caractéristique sur le panneau de commande à exécuter ensuite par un opérateur pour l'activation de la fonction de machine correspondant à cette relation de déclenchement.

14. Panneau de commande selon la revendication 13, **caractérisé en ce que** les marquages perceptibles de manière haptique sont conçus de façon à ce qu'ils permettent de reconnaître, plus particulièrement de détecter, sans support visuel, grâce à des guidages réalisés sur la surface du panneau de commande pour un doigt ou d'autres parties de main de l'opérateur, le type ou la direction du geste tactile ou du mouvement tactile caractéristique nécessaire pour l'activation de la fonction de machine correspondante.

15. Panneau de commande selon la revendication 13 ou 14, **caractérisé en ce que**, à deux fonctions de machine liées fonctionnellement, plus particulièrement complémentaires, ou plus, correspondent une pluralité de champs de sélection immédiatement adjacents, dans lequel des marquages haptiques spécifiques sur le panneau de commande permettent de reconnaître, plus particulièrement de détecter, sans support visuel, la relation fonctionnelle des champs de sélection et/ou de différencier les champs de sélection correspondants.
